Europäisches Patentamt

European Patent Office

Office européen des brevets

(11) Publication number: **0 205 414**
**A2**

## (12) EUROPEAN PATENT APPLICATION

(21) Application number: 86850169.3

(51) Int. Cl.⁴: **B60R 9/04**

(22) Date of filing: 04.06.86

(30) Priority: 13.06.85 SE 8502949

(43) Date of publication of application:
**17.12.86 Bulletin 86/51**

(84) Designated Contracting States:
**DE FR GB**

(71) Applicant: **KAMI, KALIX MEKANISKA**
**INDUSTRIER AB**
**Box 130**
**S-952 01 Kalix(SE)**

(72) Inventor: **Källström, Krister**
**Sveavägen 94**
**S-113 50 Stockholm(SE)**

(74) Representative: **Örtenblad, Bertil Tore**
**Noréns Patentbyra AB Banérgatan 73**
**S-11526 Stockholm(SE)**

(54) A load carrier.

(57) A load carrier for automotive vehicles, primarily private automobiles, intended to be mounted on the roof of the vehicle transversely of the longitudinal axis thereof, the load carrier comprising two load-carrier shoes and a load-carrier bar extending therebetween, each of the shoes incorporating a support element arranged to support against a vehicle roof, and a gripping means arranged to engage around the side part of the vehicle roof. According to the invention each of the load-carrier shoes (3) includes a body element (8), to which the gripping means (9) is attached, with the support element (13) being attached to the gripping means. A tensioning or tightening means (30) is attached to at least one body element (8) of the load-carrier shoes (2,3) and is arranged to co-act with one end (29) of the load-carrier bar (4), so as to enable the load-carrier bar - (4) to move telescopically in a tubular portion (21) of the body element (8) of a load-carrier shoe under the influence of the tensioning or tightening means (30).

Fig.1

# A load carrier

The present invention relates to a load carrier for automotive vehicles, primarily private automobiles. The load carriers are intended to be mounted on the roof of the automobile to carry roof loads thereon.

The majority of automobiles found on the market are provided with a so-called drip moulding around the side edges of the vehicle roof. This drip moulding is utilized for securing load carriers, roof racks, ski racks etc. To this end the load carrier includes two shoes which incorporate a support and a tensioning claw which co-act to grip around the actual drip moulding and in so doing secure the load carrier to the vehicle. A load-carrier bar extends between the shoes.

The drip moulding has been excluded from vehicles manufactured in recent years. Thus, with the exclusion of the drip moulding, the vehicle roof merges with the sides of the vehicle and the door architraving, wherewith the roof plating is bent along the upper edges of the car sides, so as to form an edge along the sides of the roof.

Because drip mouldings have been excluded from a number of makes of vehicle, various novel shoe designs have been developed for such load carriers, these shoes being intended for attachment to the aforesaid edge. A common feature of the load carriers retailed on the market is that the shoes include a support leg intended to support against the vehicle roof through a relatively wide abutment area, and a tensioning claw arranged to abut the aforesaid edge. When mounting the load carrier, the shoes are adjusted to the desired position along the load carrier bar, such that the tensioning claws can be brought into firm abutment with the aforesaid edge when adjusting the position of the tensioning claws in relation to the support leg.

One serious problem with these known load carriers is that when a load is placed on the load carrier the load-carrier bar is biassed downwardly, under a spring force. This is particularly noticeable when the load carriers are subjected to dynamic loads when the vehicle is in motion. This downward biassing of the load-carrier bar in the central region thereof results in a force on the tensioning claws which causes the claws to be displaced outwardly from the sides of the vehicle and thus out of abutment with the aforesaid edge, or at least so that abutment with said edge is greatly reduced, with the subsequent risk of movement of the load carriers in the longitudinal direction of the vehicle, and in the extreme case resulting in the load carriers falling from said vehicle. the basic problem with load carriers of this kind is that it is endeavoured to clamp the shoes in a direction between the support shoe and the tensioning claw, which means that the shoes will only be fastened satisfactorily to the aforesaid edge and the vehicle roof when the distance between the shoes is correct and when there is no downward flexing of the load-carrier bar.

In addition, it is necessary with such load carriers that both of the tensioning claws and at least the lower part of the support shoes are designed specifically for each make of vehicle, since the cross-sectional shape of the aforesaid edge and its position relative to the upper surface of the vehicle roof varies between the different makes of vehicle.

The aforementioned problems are solved by means of the present invention, which provides a solution in which in one embodiment each shoe requires solely one element specific to the make of vehicle in question.

Thus, the present invention relates to a load carrier for automotive vehicles, primarily private automobiles, intended for mounting on the roof of a vehicle transversely of the longitudinal direction thereof, said load carrier comprising two load-carrier shoes and a load-carrier bar extending therebetween, where each shoe includes a support element arranged to support against a vehicle roof, and a gripping means arranged to engage the side part of the roof, said load-carrier being characterized in that each of the shoes incorporates a body element to which the gripping means is attached; in that the support element is attached to the gripping means; and in that a tensioning means is attached to at least one of the body elements of the load-carrier shoes and arranged to co-act with one end of the load-carrier bar, so that said load-carrier bar can be displaced telescopically in a tubular part associated with the body element of a load-carrier shoe, under the influence of the tensioning means.

The invention will now be described in more detail with reference to a number of exemplifying embodiments thereof illustrated in the accompanying drawings, in which

Figure 1 is a partial cut-away side view of a load-carrier shoe according to a first embodiment of the invention;

Figure 2 is a sectional view taken on the line A-A in Figure 1;

Figure 3 illustrates in perspective one detail of the load-carrier shoe;

Figure 4 illustrates in perspective a support block associated with the load-carrier shoe;

Figure 5 illustrates in perspective a gripping plate associated with the load-carrier shoe;

Figure 6 illustrates a detail of the load-carrier shoe according to a second embodiment;

Figure 7 illustrates an end plug seen from the right in Figure 6, with the key removed;

Figure 8 illustrates schematically a complete load-carrier according to the invention; and

Figure 9 illustrates a detail of the load-carrier shoe in which the gripping plate is of modified construction.

Figure 8 illustrates schematically a load-carrier 1 according to the invention. The load-carrier incorporates two load-carrier shoes 2,3 and a load-carrier bar 4 extending therebetween. Figures 8,9 and 1 illustrate a vehicle roof 5 in chain lines. The load-carrier 1 is intended to be mounted transversely of the longitudinal axis of the vehicle, in a conventional manner, and to co-act with the edge portions 6,7 of the vehicle roof 5.

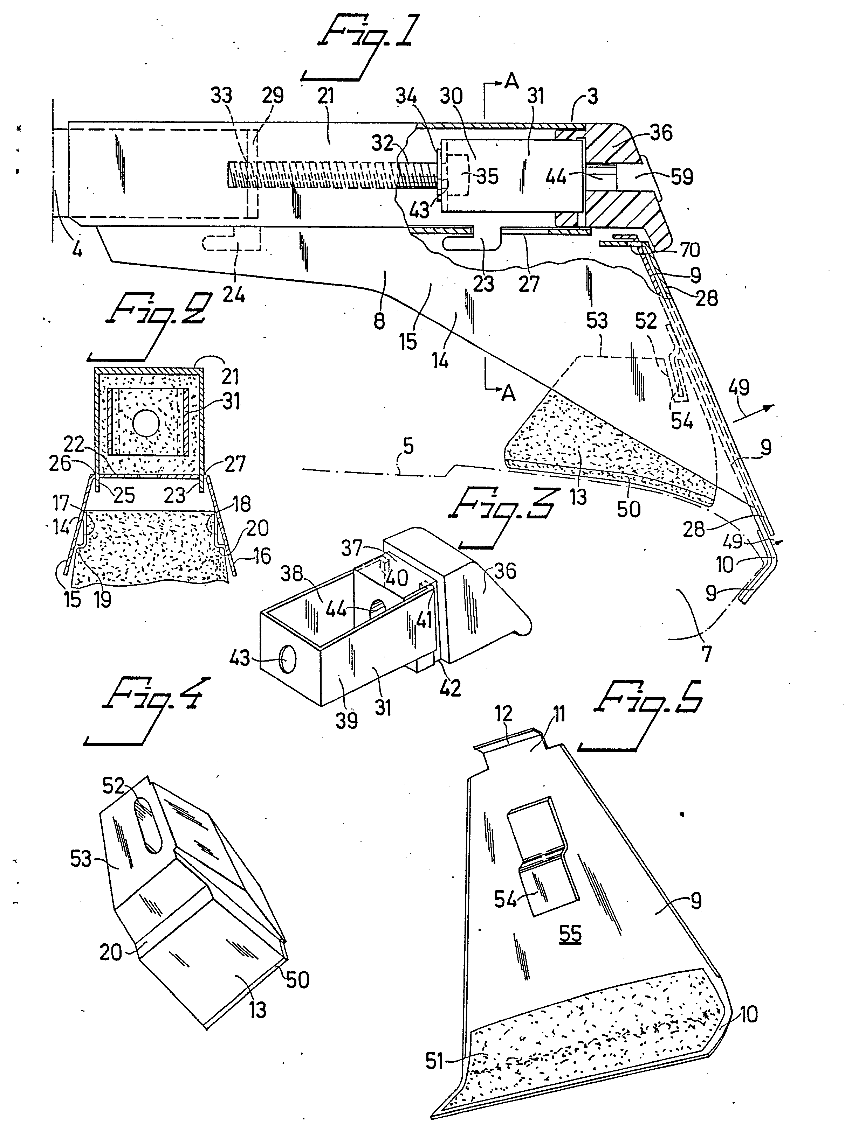

Figure 1 is a partially cut-away side view of a load-carrier shoe 3. According to the invention, each of the shoes 3,4 incorporates a body element 8, preferably a bent or curved steel plate, to which a gripping means and a support element are attached. The gripping means comprises a gripping plate 9, vide also Figure 5, the lower part 10 of which is bent to a shape adapted for connection to one side part 6,7 of the vehicle roof 5. The upper part 11 of the gripping plate 9 is provided with attachment means, preferably in the form of an outwardly extending tongue 12, for co-action with a corresponding slot 70 in the aforesaid body element 8. One extremely important feature in this respect is that, as a result of the aforesaid attachement of the gripping plate in the body element, the gripping plate 9 can be pivoted to a limited extent relative to the body element 8, as described in more detail hereinafter.

The support element includes a support block 13 attached to the inside of the gripping plate 9.

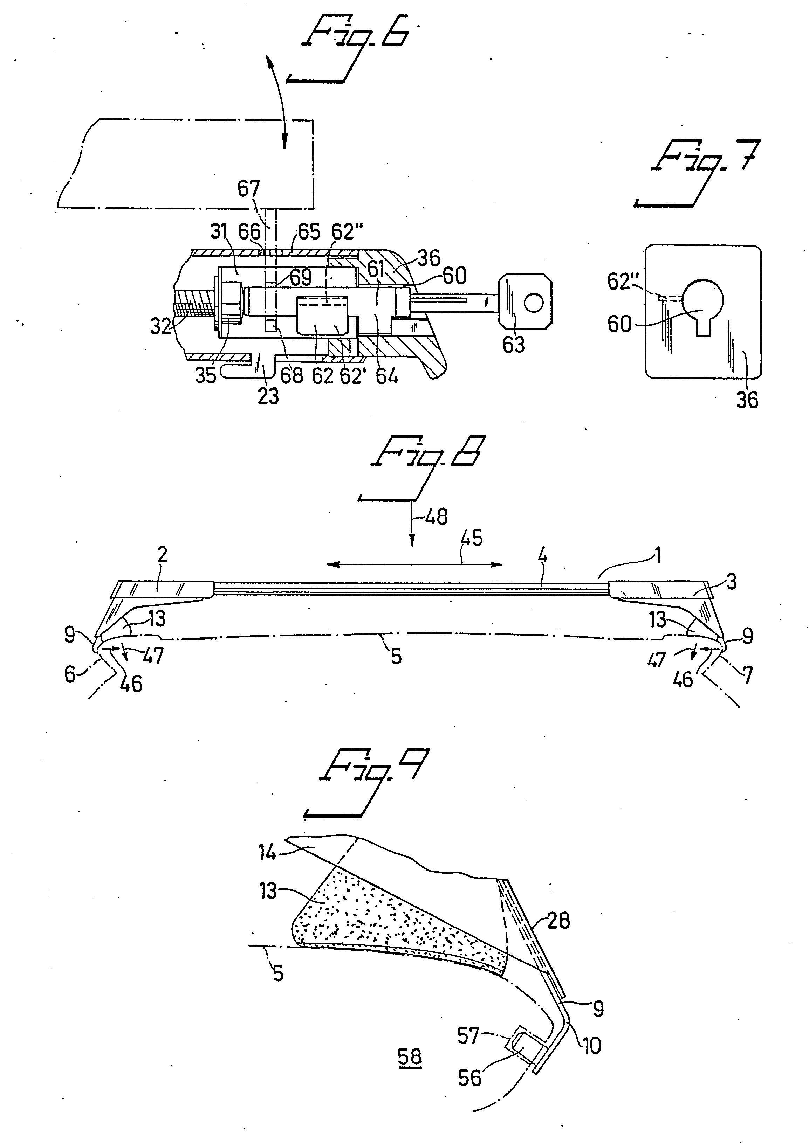

As beforementioned, the body element is preferably made of steel plate, although it may also be moulded entirely or partially from aluminium, or manufactured totally or partially from some other material. The body element 8 includes a lower part 14, which is substantially of U-shape when seen in cross-section, A-A, vide Figure 2, with the legs 15,16 angled outwards. A side surface 28 extends between the legs 15,16 along one respective edge of said legs, said side surface 28 forming the outer surface of the lower part when the load carrier is mounted on a vehicle. The legs may be provided with support flanges 17,18 for abutment with corresponding side surfaces 19,20 of the support block 13. This arrangement enables the support block 13 to be secured or fixed vertically as seen in Figures 1 and 2. The body element 8 also includes an upper part comprising a U-shaped portion 21, which preferably has a rectangular or square cross-sectional shape and the inner measurements of which are slightly greater than the outer measurements of the load-carrier bar 4. The U-shaped portion 21 is attached to the aforesaid lower part in a manner such that the U-shaped portion together with the upper side 22 of said lower part forms a tubular portion of the load-carrier shoe.

In accordance with one preferred embodiment of the invention, the U-shaped portion 21 is provided with L-shaped tongues 23,23,25 which extend downwardly in Figures 1 and 2 and which extend from the free ends of the legs of the U-shaped portion and co-act with corresponding slots 26,27 in the upper surface 22 of the lower part 14 of said body element 8, such that the U-shaped portion is secured vertically and against displacement to the left in Figure 1.

Thus, the aforesaid gripping plate 9 and therewith also the aforesaid support block 13, is not secured so as to be adjustable relative to the load-carrier shoe. By non-adjustably secured is meant here that the gripping plate cannot be adjusted by means of a force generating means, such as a screw or a link-arm system relative to the load-carrier shoe in order to cause the plate to tighten around the respective side part 6,7 of the vehicle roof.

In accordance with the invention there is also provided a tensioning means which is attached to at least one of the body elements 8 of the load-carrier shoes and which is arranged to co-act with one end 29 of the load-carrier bar 4 so that said bar can be displaced telescopically in the tubular portion 21 of the load-carrier body element 8 under the influence of the aforesaid tensioning means.

The tensioning means 30 includes a holder 31, vide Figures 1, 2 and 3, attached to the tubular portion 21, and a setting screw 32 which can be rotated relative to the holder 31. The screw 32 is arranged to co-operate with a screw threaded hole 33 in the end surface 29 of the load-carrier bar 4. A washer or like plate 34 is placed around the screw 32, in order to prevent axial displacement of the screw relative to the holder 31. The head 35 of the screw is located on the other side of the holder. The holder can be riveted or welded to the tubular portion.

In accordance with one preferred embodiment of the invention, however, the holder is secured by means of an end plug 36 located in the outer end of the tubular portion. The plug 36 is provided with a forward part 37, which is arranged to project into the tubular portion. The holder 31 includes a substantially U-shaped section, see Figure 3, the free ends 40,41 of the legs 38,39 of which section are secured in grooves 42 in the plug 36. A hole 43 for the screw 32 is provided in the bottom of the U-shaped section. Extending through the plug 36 is a bore 44, which enables a tool to be brought into engagement with the screw head 35. The screw head 35 is suitably designed to receive a so-called Allen key. The bore 44 may be closed with a plastic plug 59.

When the load-carrier 1 is to be mounted on a vehicle, the distance between the gripping plates 9 is adjusted by means of the screw 32, so that the gripping plates fit the side edges of the vehicle roof 5. The load-carrier shoes 2,3 are then moved towards one another by means of the screw 32, until the gripping plates firmly abut the edges of the side parts 6,7 of the vehicle roof. In accordance with one embodiment, both the gripping plates 9 and the support blocks 13 are constructed for the roof design of a specific make of vehicle. Thus, subsequent to tightening the load-carrier to the vehicle roof in the aforedescribed manner there prevails in the load-carrier a force which acts in the direction shown by the arrow 45 and which is balanced by the force 46 exerted by the gripping plates against the side parts 6,7 of the vehicle roof.

Thus, in distinction to the aforementioned previous endeavours to fasten and secure the load-carrier by exerting a force between respective gripping plates and respective support blocks the load-carrier according to the invention is, instead, secured by tensioning the whole of the load-carrier across the vehicle roof. As a result of the moment of force generated around the load-carrier shoes, the support blocks will abut the vehicle roof with a smaller force 47. In addition, the aforesdescribed load-carrier construction results in a pre-tensioning of the load-carrier, meaning that the tendency of the load-carrier bar to bend downwardly under a spring biasing force when the carrier is loaded is smaller than with the known load-carrier constructions.

However, should marked downward spring-biassing of the carrier bar occur, for example due to high dynamic forces as a result of heavy loads and uneven road surfaces, the gripping plates and the support blocks will still remain in abutment with the vehicle roof, in the intended manner. This is due to the aforementioned characteristic feature, namely that the gripping plates have restricted pivotal movement relative to the body element 8. Thus, when a heavy load acts in the direction of the arrow 48, the side surfaces 28 of the load-carrier shoes tend to be displaced outwardly, as indicated by the arrow 49 in Figure 1. In the case of prior art load-carriers this would cause the tensioning claws to move out of abutment with the side sufaces 6,7 of the vehicle roof. In the case of the load carrier according to the present invention, however, although the side surface 28 will spring outwardly to some extent, as indicated by the arrow 49, the position of the gripping plates in relation to the side parts 6,7 of the vehicle roof will be maintained, due to the aforesaid limited pivotal movement of the side surface 28. The force exerted by the gripping plates against the side parts 6,7 is maintained to a large extent under the influence of the support blocks 13. When the load is temporarily increased, the support blocks namely exert temporarily a corresponding greater force against the vehicle roof, which means that the blocks will be held in their respective positions, as a result of friction against the vehicle roof, and therewith retain the gripping plates in position, since the support blocks are secured in the gripping plates. Preferably, both the undersurface of the support blocks 13 and the inner surface of the gripping plates are coated with a rubber coating 50,51, partly to protect the vehicle and partly to obtain a high frictional force against the vehicle roof and the side parts respectively.

It will be evident from the aforegoing that the present invention solves the problems mentioned in the introduction in this respect.

In order to ensure that a pressure force is also exerted on the gripping plate in the direction of arrow 46 in the case of a static load, a resilient material, such as rubber, can be inserted between the gripping plate 9 and the side surface 28.

It was mentioned in the aforegoing that solely one of the load carrier shoes is provided with a tensioning or tightening means. In this case the non-adjustable end of the load-carrier bar, i.e. with regard to position, is secured in a suitable manner relative to the other load-carrier shoe. However, in accordance with one preferred embodiment both load-carrier shoes 2,3 are provided with such tensioning or tightening means.

As beforementioned, according to one embodiment both the gripping plates 9 and the support blocks 13 are constructed in accordance with the roof design of a specific make of vehicle. The support blocks can, per se, be attached to the gripping plates in any suitable manner whatsoever.

However, in accordance with one preferred embodiment of the invention each support block 13 is provided with a groove 52 in its upper side surface 53, said groove being intended to co-act with a downwardly projecting tongue 54 on the inside 55 of said gripping plates 9, vide Figures 1, 4 and 5. This determines the location of the support blocks 13 in relation to the bent or folded part 10 of the gripping plate 9.

As illustrated in Fig. 5, the tongue 54 can be either spot welded to the inside surface of the gripping plate, or can be punched from said gripping plate 9. It is necessary for the gripping plate 9 to be constructed to fit the specific roof design of a given make of vehicle, particularly with regard to the bent part 10 of the plate. However, several makes of car may have a similar roof design, and hence one and the same gripping plate 9 can be fitted to various makes of vehicle. By varying the position of the tongue on the gripping plate and the tongue angle in relation to said plate, it is possible to use one and the same support block 13 for all makes of vehicle, or at least to substantially all makes of vehicle. In order to conform more readily to the various curve forms of vehicle roofs at the location where the support block abuts the roof, the rubber layer 50 can be given commensurate thickness, for example a thickness of 5 mm. The remainder of the support block is preferably made from a relatively hard, cold-resistant plastics material.

Thus, by varying the angle and position of the tongue 54 and the configuration of the bent part 10 the gripping plate 9 need be the only element specifically constructed for a particular make of vehicle. This provides a considerable advantage from the aspects of storage, manufacture and retail.

Figure 9 illustrates a second embodiment of the gripping plate 9. According to this embodiment, the bent or folded end 10 of the gripping plate 9 is provided with one or more inwardly directed outwardly projecting pegs 56 intended to co-act with corresponding holes 57 in the body work 58 of a vehicle. The holes 57 are located in the proximity of the side parts of the roof. A number of vehicles of more modern construction are provided with such holes 57.

According to one preferred embodiment, the aforesaid plug is provided with a key-slot aperture 60 instead of a cylindrical hole 44, vide Figures 6 and 7. The key-slot-like aperture 60 is arranged to accommodate a latch key arrangement 61 of the kind with which a key hole can be plugged. In this respect, the legs 38,39 of the U-section of said holders 31 are sufficiently long to receive the rotatable part 62 of the latch key arrngement 61, therewith to block the hole 60 by means of said latch key arrangement 61. This prevents access to the screw head 35 in the event of any one attempting to steal the load carrier, by removing it from the vehicle.

The latch key arrangement is of a kind well known to the art, in which a part 62 can be rotated relative to a fixed part 64 by means of a key 63. The latch key arrangement 61 is inserted through the aperture or hole 60 to the position shown in Figure 6. The rotatable part 62 is then turned by the key 63 from a vertical position 62' to a horizontal position, as illustrated in broken lines 62" in Figures 6 and 7. When the rotatable part occupies this latter position, it is impossible to withdraw the latch key arrangement from the aperture 60, although the key 63 can be withdrawn therefrom.

In accordance with a further embodiment of the invention, the upwardly facing side 65 of the aforesaid tubular portion 21 has a slot 66 or an aperture provided therein. This slot is intended to receive part of an auxiliary fitting 67 of the load carrier 1, for example a part 68 of a ski rack, said part 68 being provided with an aperture 69 intended to co-act with the aforesaid fixed part 64 of the ancillary fitting relative to the tubular portion 21.

It will be understood that the present invention is not restricted to the aforedescribed embodiments and that modifications can be made. For example, the body elements may have the form of one-piece structures instead of two assembled units. Further, the tensioning or tightening means may have a construction different to that aforedescribed while achieving the same function.

The aforedescribed embodiments are therefore not limiting in any way, since modifications can be carried out within the scope of the invention defined in the following claims.

## Claims

1. A load carrier for automotive vehicles, primarily private automobiles, intended for mounting on the roof of the vehicle transversely to the longitudinal axis thereof, said load carrier comprising two load-carrier shoes and a load-carrier bar extending therebetween, each of said load-carrier shoes incorporating a support element arranged to support against a vehicle roof, and a gripping means arranged to engage around the side part of the roof, characterized in that each of the load-carrier shoes (2,3) includes a body element (8) in which said gripping means (9) is attached; in that said support element (13) is attached to said gripping means; and in that a tightening or tensioning means (30) is attached to at least one body element (8) of the load-carrier shoes (2,3) and arranged to co-act with one end (29) of the load-carrier bar (4) so that the load-carrier bar can be displaced telescopically into a tubular portion (21) of the body element (8) of a load-carrier shoe under the influence of the tensioning or tightening means (30).

2. A load carrier according to Claim 1, characterized in that the gripping means comprises a gripping plate (9), the lower part (10) of which is bent to a shape intended for connection to the edge part (6,7) of a vehicle roof, and the upper part (11) of which is provided with attachment means, preferably in the form of an outwardly projecting tongue (12), for co-action with a corresponding slot (70) in said body element (8), such as to afford restricted pivotal movement of the gripping plate (9) relative to the body element (8).

3. A load carrier according to Claim 1 or 2, characterized in that the tightening or tensioning means (30) includes a holder (31) attached to the tubular portion (21), and a setting screw (33) which can be rotated relative to the holder (31), said screw (31) being arranged to co-operate with a screw threaded hole (33) in the end surface (29) of the load-carrier bar (4).

4. A load carrier according to Claim 1, 2 or 3, characterized in that both of the load-carrier shoes (2,3) are provided with said tightening or tensioning means (30) and are arranged to co-act with a respective end of the load-carrier bar.

5. A load carrier according to Claim 4, characterized in that the bent part (10) of the gripping plate (9) is provided with one or more inwardly extending outwardly projecting pegs (56) intended to co-act with corresponding holes (57) in the body work (58) of a vehicle placed in the vicinity of the side parts of the vehicle roof.

6. A load carrier according to Claim 1, 2, 3 or 4, characterized in that said support element includes a support block (13) attached to the inner surface of said gripping plate (9).

7. A load carrier according to Claim 6, characterized in that the upper side (53) of the support block (13) is provided with a groove (52) for co-action with a downwardly extending tongue (54) located on the inside surface (55) of the gripping plate (9), the location of the tongue (54) therewith determining the location of the support block (13) in relation to the bent part (10) of the gripping plate (9).

8. A load carrier according to Claim 3, characterized in that said holder (31) is attached to the outer end of the tubular portion (21) by means of an end plug (36), whereas the end part (29) of the load carrier bar (4) is intended to be inserted into the inner end of the tubular portion (21); in that said holder (31) incorporates a substantially U-shaped section, the free ends (40,41) of the legs (38,39) of which are attached to said plug (36) and the bottom of which has provided therein an aperture (43) through which the aforesaid setting screw (32) is intended to extend; and in that the plug (36) is provided with a bore (44; 60) which enables a tool to be inserted through the plug into engagement with the head of the screw (32).

9. A load carrier according to Claim 8, characterized in that the plug (36) is provided with a keyhole-like aperture (60) arranged to accommodate a latchkey arrangement (61) of the kind with which a key hole can be plugged; in that the legs (38,39) of the U-shaped section of the holder (31) have a length sufficient to receive the rotatable part (62) of the latchkey arrangement (61) thereby enabling the aperture (60) to be plugged by means of the latchkey arrangement (61).

10. A load carrier according to Claim 9, characterized in that the upwardly facing side (65) of the tubular portion (21) has provided therein a slot (66), or an aperture, which is located in the vicinity of said holder (31), said slot (66) being arranged to receive a part (68) of an ancillary fitting (67) of the load carrier, such as a ski rack, said part (68) being provided with an aperture (69) intended for co-action with said latchkey arrangement (61) so as to lock the ancillary fitting (67) relative to the tubular portion (21).

0 205 414

Fig.1

Fig.2

Fig.3

Fig.4

Fig.5

Fig.6

Fig.7

Fig.8

Fig.9